# EUROPEAN PATENT APPLICATION

(11) **EP 1 717 114 A2**
(43) Date of publication of application: **02.11.2006**
(21) Application number: 06003888.2
(22) Date of filing: 27.02.2006
(51) Int. Cl.: B60R 22/46

(54) **Seatbelt retractor and seatbelt device equipped with the seatbelt retractor**

(30) Priority: 26.04.2005 JP 2005128136
(71) Applicant: TAKATA CORPORATION, Minato-ku, Tokyo 106-8510 (JP)
(72) Inventor: Kosugi, Noriyuki Takata Corporation, Tokyo 106-8510 (JP); Hiramatsu, Koji Takata Corporation, Tokyo 106-8510 (JP); Shiotani, Masahiro Takata Corporation, Tokyo 106-8510 (JP); Kanamori, Yasushi Takata Corporation, Tokyo 106-8510 (JP)
(74) Representative: Banzer, Hans-Jörg

(57) **Abstract**

In order to efficiently and sufficiently achieve an EA function by an EA mechanism when a seatbelt (3) is being withdrawn due to an inertia force from a vehicle occupant after a belt-retracting operation performed by a pretensioner (11) when the seatbelt (3) is being withdrawn due to an inertia force from a vehicle occupant after a belt-retracting operation by the pretensioner (11), a relative rotational torque is generated between a first spool component (4a) retracting the seatbelt (3) and a second spool component (4b) to which a driving force of the pretensioner (11) is transmitted. When the relative rotational torque reaches a predetermined value or more, a pin (31) is subject to bending deformation and tensile deformation so that the first spool component (4a) rotates relatively with respect to the second spool component (4b) in a belt-withdrawing direction. Accordingly, a spool (4) rotates in a belt-retracting direction so that a torsion bar (7) becomes twisted, whereby impact energy is absorbed.

## Description

The present invention relates to a seatbelt device which is installed in a vehicle, such as an automobile, and includes a seatbelt retractor that prevents a spool from rotating in a belt-withdrawing direction in case of an emergency situation where large deceleration of the vehicle occurs due to, for example, a collision. This prevents a seatbelt from being withdrawn, thereby restraining and protecting a vehicle occupant. In particular, the present invention relates to a seatbelt retractor which is equipped with a pretensioner (PT) that rotates the spool in a belt-retracting direction in an initial stage of the emergency situation so as to increase the restraining force applied to the vehicle occupant from the seatbelt, and which is also equipped with an energy-absorbing mechanism (which will also be referred to as an EA mechanism hereinafter) that absorbs impact energy applied to the vehicle occupant from the seatbelt when the seatbelt is held back from being withdrawn.

### Background Art

Conventional seatbelt devices provided in vehicles, such as automobiles, restrain a vehicle occupant with a seatbelt in an emergency situation in order to prevent and protect the vehicle occupant from being moved inertially from a seat. Such seatbelt devices are equipped with a seatbelt retractor. The seatbelt retractor retracts and withdraws the seatbelt with a spool, and is provided with a lock mechanism for locking the spool in an emergency situation so as to hold back the spool from rotating in the belt-withdrawing direction. Thus, the seatbelt is prevented from being withdrawn under an emergency situation.

A conventional example of such a seatbelt retractor (for example, see Japanese Unexamined Patent Application Publication No. 2003-54363 (Paragraphs [0004] to [0016])) is equipped with a pretensioner which rotates the spool in the belt-retracting direction with reactant gas in an initial stage of an emergency situation so as to increase the restraining force applied to the vehicle occupant from the seatbelt, and is also equipped with an EA mechanism which absorbs the impact energy in order to limit the seatbelt load. Such energy absorption is achieved in order to alleviate the impact acting on the vehicle occupant from the seatbelt in a state where the spool is locked with respect to the belt-withdrawing direction by the lock mechanism such that the seatbelt is prevented from being withdrawn.

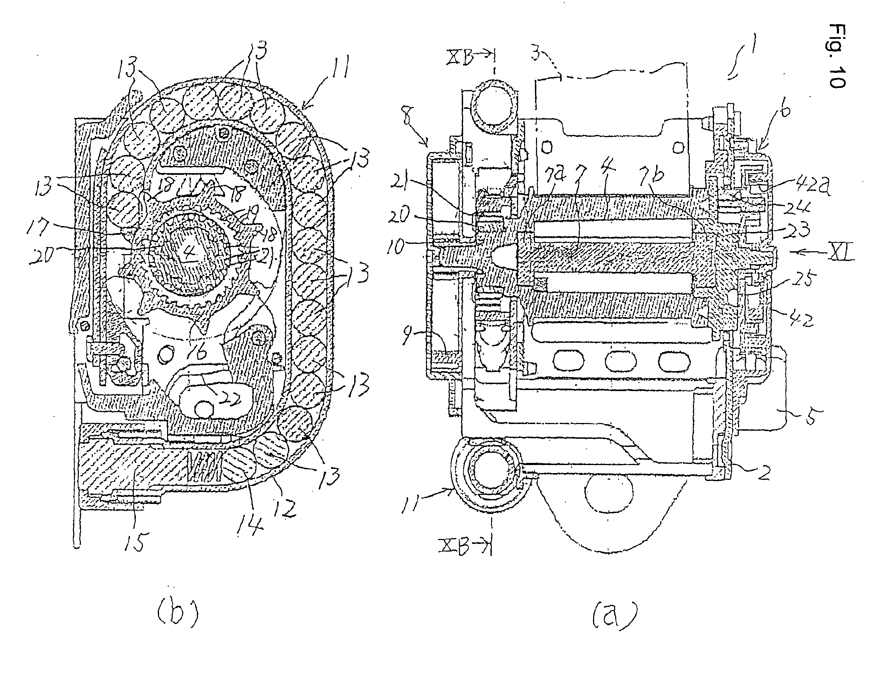

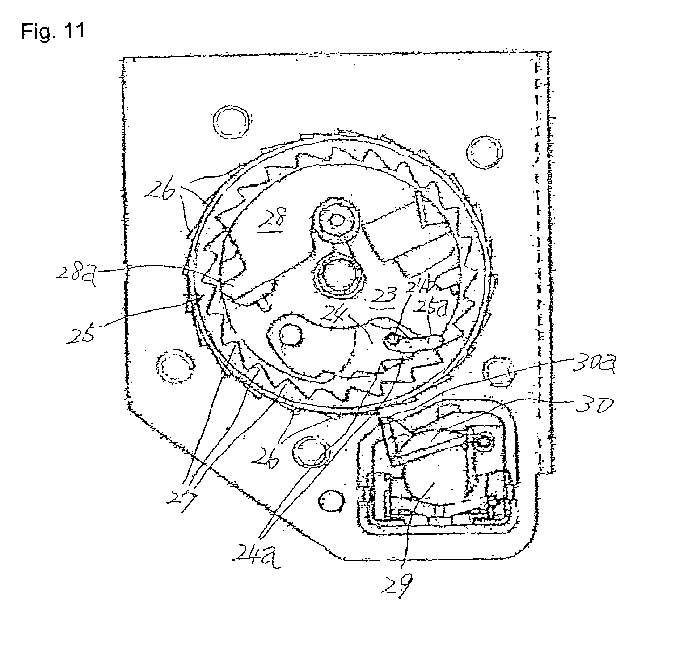

Fig. 10 illustrates an example of such a seatbelt retractor equipped with a pretensioner and an EA mechanism. Specifically, Fig. 10(a) is a vertical sectional view, and Fig. 10(b) is a cross-sectional view taken along line XB-XB in Fig. 10(a). Fig. 11 is a schematic diagram illustrating a state in which a component, such as a cover, is removed from the seatbelt retractor. Fig. 11 is viewed from a direction indicated by an arrow XI in Fig. 10(a). Although Fig. 10(a) and Fig. 11 are not included in Japanese Unexamined Patent Application Publication No. 2003-54363, the seatbelt retractor shown in Fig. 10(a) is attained by combining the pretensioner discussed in Japanese Unexamined Patent Application Publication No. 2003-54363 with a commonly-known seatbelt retractor equipped with an EA mechanism based on the description in the specification of Japanese Unexamined Patent Application Publication No. 2003-54363. On the other hand, Fig. 11 is a schematic diagram illustrating, for example, a commonly-known lock mechanism disclosed in Japanese Patent No. 3192198.

In Fig. 10(a), reference numeral 1 indicates a seatbelt retractor. Reference numeral 2 indicates a U-shaped frame. Reference numeral 3 indicates a seatbelt. Reference numeral 4 indicates a spool which is rotatably supported between opposite side walls of the U-shaped frame 2 and which retracts the seatbelt 3. Reference numeral 5 indicates a deceleration detecting mechanism (e.g. a vehicle sensor) which is activated when it detects large deceleration of a vehicle occurring in an emergency situation. Reference numeral 6 indicates a lock mechanism which is activated by the vehicle sensor 5 and prevents the spool 4 from rotating in at least the belt-withdrawing direction. Reference numeral 7 indicates a torsion bar which is loosely fitted in the center of the spool 4 in the axial direction thereof. The left end of the torsion bar 7 is provided with a first torque transmission shaft 7a which is rotatably linked with the spool 4. The right end of the torsion bar 7 is provided with a second torque transmission shaft 7b which is rotatably linked with the lock mechanism 6. Reference numeral 8 indicates a spring mechanism having a spiral spring 9 whose spring force constantly biases the spool 4 in the belt-retracting direction via a bush 10. Reference numeral 11 indicates a pretensioner which is activated in an emergency situation and generates a belt-retracting torque (driving force).

In Fig. 10(b), reference numeral 12 indicates a pipe whose one end is provided with an opening. Reference numeral 13 indicates a plurality of force-transmitting members each formed of a metallic ball. The force-transmitting members 13 are disposed in a movable fashion in the pipe 12 and are arranged in contact with each other. Reference numeral 14 indicates a ball-shaped piston which is disposed in a movable fashion in the pipe 12 and receives gas pressure of reactant gas. Reference numeral 15 indicates a gas generator. Reference numeral 16 indicates a ring gear which is disposed eccentrically to a rotary shaft of the spool 4. The ring gear 16 extends partially into the pipe 12 through the opening provided at one end of the pipe 12. Reference numerals 17, 18 indicate levers protruding from an outer periphery of the ring gear 16. Reference numeral 19 indicates internal teeth arranged along an inner periphery of the ring gear 16. Reference numeral 20 indicates a pinion (corresponding to a driving-force transmitting member according to the present invention) disposed around an outer periphery of a left end portion of the spool 4 (see Fig. 10(a)). The pinion 20 is fixed to the spool 4 in an integrally rotatable fashion. Reference numeral 21 indicates external teeth arranged along an outer periphery of the pinion 20. Reference numeral 22 indicates a casing which is disposed adjacent to the end of the pipe 12 and accommodates the force-transmitting members 13 that are released from the pipe 12.

In Fig. 11, reference numeral 23 indicates a locking base (corresponding to a locking member according to the present invention) which is rotatable integrally with the second torque transmission shaft 7b of the torsion bar 7. Reference numeral 24 indicates a pawl held by the locking base 23 in an oscillating fashion. Reference numeral 25 indicates a lock gear which is normally rotatable integrally with the locking base 23, but rotates relatively with respect to the locking base 23 in response to the activation of the vehicle sensor 5 in an emergency situation. An outer periphery of the lock gear 25 is provided with ratchet teeth 26. The lock gear 25 has a cam hole 25a for guiding a pin 24b of the pawl 24 in order to allow latching claws 24a of the pawl 24 to engage with internal teeth 27 provided on a side wall of the frame 2. Reference numeral 28 indicates an inertial member (webbing sensor) held by the lock gear 25 in an oscillating fashion and having a latching claw 28a. Reference numeral 29 indicates an inertial ball which is shifted forward of the vehicle in response to large deceleration occurring in an emergency situation. Reference numeral 30 indicates an actuator having a latching claw 30a at one end thereof. Although some of the components in Fig. 11 should actually be indicated by dotted lines, they are illustrated with solid lines for providing better understanding of the drawing.

In a normal condition of the seatbelt retractor 1, the latching claws 24a of the pawl 24 of the lock mechanism 6 are not engaged with the internal teeth 27 of the frame 2, as shown in Fig. 11. Moreover, the latching claw 28a of the webbing sensor 28 is not engaged with an internal tooth 42a of a retainer 42 shown in Fig. 10(a). Furthermore, the inertial ball 29 of the vehicle sensor 5 is in a non-activated state, such that the latching claw 30a of the actuator 30 is not engaged with the ratchet teeth 26. When the seatbelt 3 is not worn by a vehicle occupant, the seatbelt 3 is retracted by the spool 4 via the spring mechanism 8 to the fullest extent.

In this state, when the seatbelt 3 is withdrawn at normal speed so as to be worn by the vehicle occupant, the spool 4, the torsion bar 7, the locking base 23, and the lock gear 25 are rotated integrally in the belt-withdrawing direction. Thus, the pawl 24 and the webbing sensor 28 are not activated, such that the latching claws 24a are not engaged with the internal teeth 27. Accordingly, the seatbelt 3 can be withdrawn smoothly and readily.

After the seatbelt 3 is withdrawn to an appropriate length, a tongue (not shown) slidably supported by the seatbelt 3 is fastened to a buckle (not shown) fixed to the vehicle body, whereby the seatbelt 3 is worn by the vehicle occupant. After the tongue is fastened to the buckle, the excess withdrawn portion of the seatbelt 3 is retracted by the spring mechanism 8. As a result, the seatbelt 3 fits onto the vehicle occupant without giving the occupant a feeling of tightness.

In a state where the seatbelt 3 is worn by the vehicle occupant, if large deceleration acts in the forward direction of the vehicle due to, for example, a collision, the gas generator 15 of the pretensioner (PT) 11 is activated in response to the detection of this deceleration so as to generate reactant gas. Moreover, the inertial ball 29 of the vehicle sensor 5 is shifted in the forward direction of the vehicle.

The reactant gas generated by the gas generator 15 is introduced into the pipe 12. The piston 14 receives the gas pressure of this gas and thus pushes the force-transmitting members 13. Consequently, the pushing force of the piston 14 is transmitted to the lever 17 of the ring gear 16 via the force-transmitting members 13 that are in contact with each other.

Subsequently, the ring gear 16 is shifted substantially towards the right in Fig. 10(b), whereby the internal teeth 19 of the ring gear 16 mesh with the external teeth 21 of the pinion 20, and a torque is generated in the ring gear 16 in the belt-retracting direction (counterclockwise in Fig. 10(b)). The ring gear 16 thus rotates in the belt-retracting direction (counterclockwise). Since the pinion 20 also rotates in the same direction, the spool 4 begins to rotate in the same direction, thereby starting the retracting operation of the seatbelt 3. Accordingly, the ring gear 16 and the pinion 20 define a metal-touching-type clutch mechanism in which the driving torque of the pretensioner 11 is transmitted to the spool 4 (via the engagement between the internal teeth 19 of the ring gear 16 and the external teeth 21 of the pinion 20).

At the same time, since the force-transmitting members 13 are pushed by the pushing force of the piston 14 generated in response to the gas pressure, the force-transmitting members 13 and the piston 14 are shifted counterclockwise with the rotation of the ring gear 16. In this case, the first force-transmitting member 13 fits into a space between the lever 17 and one of the levers 18, and the two subsequent force-transmitting members 13, 13 fit into a space between the subsequent pair of adjacent levers 18, 18 so as to become engaged with these levers 18, 18. Then, the two following force-transmitting members 13, 13 similarly fit into a space between the subsequent pair of adjacent levers 18, 18 and so on.

Each force-transmitting member 13 that is disengaged from the corresponding levers 18 is released from the end of the pipe 12 so as to become accommodated inside the casing 22.

Accordingly, the rotation of the spool 4 in the belt-retracting direction allows the seatbelt 3 to become retracted so that the seatbelt 3 is prevented from becoming loose. Thus, the seatbelt 3 is given a predetermined tension, thereby increasing the restraining force applied to the vehicle occupant.

On the other hand, the shifting of the inertial ball 29 of the vehicle sensor 5 in the forward direction of the vehicle allows the actuator 30 to rotate clockwise in Fig. 11 so that the latching claw 30a becomes engageable to the ratchet teeth 26 of the lock gear 25.

After the belt-retracting operation is performed in response to the activation of the pretensioner 11, the seatbelt 3 is pulled continuously due to an inertia force from the vehicle occupant. For this reason, a torque acts on the spool 4 in the belt-withdrawing direction, such that the spool 4 rotates in that same direction. Thus, the locking base 23 and the lock gear 25 are rotated integrally with the spool 4. In this case, the ratchet teeth 26 immediately engage to the latching claw 30a of the actuator 30 so that the lock gear 25 becomes locked, whereby the lock gear 25 is held back from rotating in the belt-withdrawing direction. However, since the locking base 23 continues to rotate in the belt-withdrawing direction integrally with the spool 4, the locking base 23 rotates relatively with respect to the lock gear 25.

Consequently, the pin 24b of the pawl 24 is guided by the cam hole 25a of the lock gear 25, such that the pawl 24 is rotated clockwise in Fig. 11. This allows the latching claws 24a of the pawl 24 to become engaged to the internal teeth 27 of the frame 2 so that the locking base 23 becomes locked, whereby the locking base 23 is held back from rotating in the belt-withdrawing direction. Accordingly, this also locks the second torque transmission shaft 7b of the torsion bar 7, thereby preventing the second torque transmission shaft 7b from rotating.

However, because the seatbelt 3 is continuously pulled further in response to the inertia force of the vehicle occupant, the spool 4 is biased further in the belt-withdrawing direction. Since the first torque transmission shaft 7a of the torsion bar 7 is also rotationally biased in the same direction, the torsion bar 7 defining an EA mechanism becomes twisted. Subsequently, the spool 4 rotates in the belt-withdrawing direction while twisting the torsion bar 7. The torsional deformation of the torsion bar 7 limits the load applied to the seatbelt 3, whereby impact energy applied to the vehicle occupant is absorbed and an impact applied to the vehicle occupant is alleviated.

After the torsion bar 7 is twisted by a predetermined amount such that the impact energy is absorbed to a certain extent, the twisting operation of the torsion bar 7 is stopped by a mechanism, not shown. Thus, the spool 4 is stopped from rotating in the belt-withdrawing direction. Accordingly, the seatbelt 3 is held back from being withdrawn, whereby the vehicle occupant is securely restrained with the seatbelt 3.

In the seatbelt retractor 1, if the seatbelt 3 is withdrawn rapidly with respect to the normal speed, the webbing sensor 28 does not respond to such a rapid rotation of the spool 4 in the belt-withdrawing direction (counterclockwise in Fig. 11). In this case, the webbing sensor 28 rotates clockwise in Fig. 11, such that the latching claw 28a engages to the internal tooth 42a. Consequently, as similar to the above, the locking base 23 becomes locked such that the locking base 23 is held back from rotating in the belt-withdrawing direction, and moreover, the second torque transmission shaft 7b of the torsion bar 7 also becomes locked such that the second torque transmission shaft 7b is held back from rotating.

There are various types of pretensioners that have been previously disclosed. One alternative example of the pretensioner 11 (for example, see Japanese Unexamined Patent Application Publication No. 2004-338614) includes a rack which moves in conjunction with the stroke of the piston during the activated state of the pretensioner 11. The rack is used to rotate the spool 4 in the belt-retracting direction via the pinion 20, whereby the belt-retracting operation is performed by the pretensioner 11.

### Problems to be Solved by the Invention

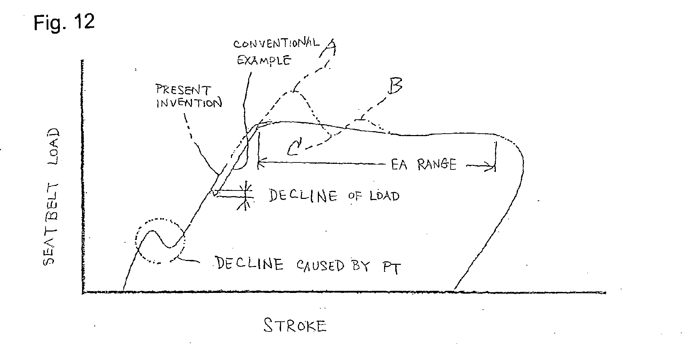

In the seatbelt retractor 1 equipped with the pretensioner 11 and the torsion bar 7 defining the EA mechanism described above, when the seatbelt 3 is being withdrawn due to the inertia force from the vehicle occupant after the belt-retracting operation performed in response to the activation of the pretensioner 11, it is difficult for the force-transmitting members 13 to return to the pipe 12 if the gas still remains in the pipe 12. In other words, the residual pressure of the gas affects the force-transmitting members 13. For this reason, in such a metal-touching-type clutch mechanism, the internal teeth 19 and the external teeth 21 cannot be readily disengaged from each other. Thus, the spool 4 cannot be readily rotated in the belt-withdrawing direction. A dotted line in Fig. 12 indicates the dynamic characteristics of the seatbelt retractor 1 (seatbelt-load versus vehicle-occupant (chest) displacement characteristics). Here, in an EA range in which the torsion bar 7 performs the EA operation, the limit load protrudes partially to form large peaks (two peaks A, B in the drawing), and declines partially to form a large decline of load (one decline C in the drawing). Thus, the limit load is not uniform.

In view of the circumstances described above, it is an object of the present invention to provide a seatbelt retractor in which a limit load by an EA mechanism is uniformized when a seatbelt is being withdrawn due to an inertia force from a vehicle occupant after a belt-retracting operation performed by a pretensioner, and to provide a seatbelt device equipped with such a seatbelt retractor.

### Means for Solving the Problems

According to the invention, this object is achieved by a seat belt retractor as defined in claim 1 and a seat belt device as defined in claim 7. The dependent claims define preferred and advantageous embodiments of the invention.

In order to achieve the abovementioned object, a seatbelt retractor according to the present invention includes a spool which retracts a seatbelt; a locking member which is normally rotatable integrally with the spool; a lock mechanism which is activated under an emergency situation and locks the locking member to prevent the locking member from rotating in a belt-retracting direction; a torsion bar linking the spool and the locking member, the torsion bar normally linking the spool and the locking member in an integrally rotatable manner, the torsion bar being twisted when the locking member is locked by the lock mechanism with respect to the belt-retracting direction; a pretensioner which is activated under the emergency situation so as to generate a driving force; and a driving-force transmitting member which is provided in the spool and transmits the driving force of the pretensioner to the spool. The seatbelt is retracted with the driving force of the pretensioner in an initial stage of the emergency situation. A load applied to the seatbelt is limited by torsional deformation when the locking member is locked by the lock mechanism with respect to the belt-retracting direction. The spool includes a first spool component retracting the seatbelt; a second spool component provided with the driving-force transmitting member in an integrally rotatable manner such that the driving force of the pretensioner is transmitted to the second spool component in the belt-retracting direction via the driving-force transmitting member; and a linking member linking the first and second spool components in a rotatable manner, the linking member normally allowing the first and second spool components to rotate integrally, the linking member being deformed when a predetermined relative rotational torque or more is generated between the first and second spool components in an activated state of the pretensioner so as to allow the first spool component to rotate relatively with respect to the second spool component in a belt-withdrawing direction.

Furthermore, according to the invention, the linking member may be subject to bending deformation and tensile deformation.

Furthermore, the linking member may be subject to torsional deformation.

Furthermore, according to a first aspect of the present invention, the locking member may be provided with a quick-lock member for locking the spool to prevent the spool from rotating in the belt-withdrawing direction when the spool is rotated rapidly in the belt-retracting direction in response to the activation of the pretensioner.

Furthermore, according to a second aspect of the present invention, the quick-lock member may be disposed rotatably in the locking member such that the quick-lock member is engageable to a frame supporting the spool, the engagement between the quick-lock member and the frame locking the spool so as to prevent the spool from rotating in the belt-withdrawing direction.

Furthermore, according to a third aspect of the present invention, the quick-lock member may be defined by a pawl disposed rotatably in the locking member, the pawl being biased constantly towards teeth provided in the frame by a biasing mechanism. The locking member may have a stopper disposed in a movable manner. The stopper maintains the pawl in a position where the pawl is not engaged to the teeth of the frame. The stopper is shifted when the spool is rotated rapidly in the belt-retracting direction in response to the activation of the pretensioner so as to allow the pawl to engage with the teeth of the frame.

Furthermore, a seatbelt device according to the present invention includes the seatbelt retractor described above; a tongue slidably supported by the seatbelt withdrawn from the seatbelt retractor; and a buckle engageable to and releasable from the tongue. The seatbelt retractor prevents the seatbelt from being withdrawn under an emergency situation in order to restrain a vehicle occupant.

### Advantages

According to the seatbelt retractor and the seatbelt device of the present invention, when the seatbelt is being withdrawn due to the inertia force from the vehicle occupant after the belt-retracting operation performed by the pretensioner, if a predetermined relative rotational torque or more is generated between the first and second spool components, the linking member becomes deformed. Thus, the first spool component rotates relatively with respect to the second spool component in the belt-withdrawing direction. Consequently, the EA function by the torsional deformation of the torsion bar is properly and sufficiently achieved. Accordingly, in an EA range in which the torsion bar performs the EA operation, the limit load of the seatbelt is made substantially uniform without any peaks or declines, whereby the impact energy can be efficiently absorbed. This advantageously limits the load applied to the seatbelt.

Furthermore, in addition to the energy absorption by the torsional deformation of the torsion bar, the EA function is also achieved by the deformation of the linking member, whereby the impact energy can be absorbed in a more uniform manner.

In particular, according to the first, second and third aspect of the present invention, when the spool is rotated rapidly in response to the activation of the pretensioner in an emergency situation, the quick-lock member is correspondingly activated so as to quickly lock the spool with respect to the rotation in the belt-withdrawing direction before the locking member is locked with respect to the rotation in the belt-withdrawing direction by the lock mechanism. Thus, the rotational angle of the spool in the belt-withdrawing direction can be held back to the utmost extent until the spool becomes locked with respect to the rotation in the belt-withdrawing direction. Consequently, the vehicle occupant can be restrained sufficiently with the seatbelt, and moreover, the decline of seatbelt load in the EA operation by the torsion bar can be reduced, whereby the EA function by the torsion bar can be efficiently and sufficiently achieved. Accordingly, by combining the first and second spool components and the linking member, a seatbelt retractor having improved, stable EA characteristics is provided.

### Brief Description of the Drawings

Fig. 1 schematically and partially illustrates a seatbelt retractor according to a first embodiment of the present invention, and includes a cross-sectional view (a) of a spool in the first embodiment; a cross-sectional view (b) taken along line IB-IB in Fig. 1(a); and a partially enlarged view (c) showing the behavior of a pretensioner in an activated state.
Fig. 2 schematically and partially illustrates a seatbelt retractor according to a second embodiment of the present invention, and corresponds to Fig. 1(a).
Fig. 3 schematically and partially illustrates a seatbelt retractor according to a third embodiment of the present invention, and corresponds to Fig. 1(a).
Fig. 4 schematically and partially illustrates a seatbelt retractor according to a fourth embodiment of the present invention, and corresponds to Fig. 1(a).
Fig. 5 includes a schematic view and a partial view of a seatbelt retractor according to a fifth embodiment of the present invention, and corresponds to Fig. 1(a).
Fig. 6 schematically and partially illustrates a seatbelt retractor according to a sixth embodiment of the present invention.
Fig. 7 illustrates the operation of the seatbelt retractor according to the sixth embodiment of the present invention shown in Fig. 6, and includes a diagram (a) showing a non-activated state and a diagram (b) showing an activated state.
Fig. 8 illustrates a seatbelt retractor according to a seventh embodiment of the present invention, and includes a diagram (a) showing a non-activated state and a diagram (b) showing an activated state.
Fig. 9 schematically illustrates an example of a seatbelt device equipped with the seatbelt retractor according to the present invention.
Fig. 10 illustrates a conventional example of a seatbelt retractor equipped with a pretensioner and an EA mechanism, and includes a vertical sectional view (a) and a cross-sectional view taken along line XB-XB in Fig. 10(a).
Fig. 11 is a schematic diagram illustrating a state in which a component, such as a cover, is removed from the seatbelt retractor shown in Fig. 10, and is viewed from a direction indicated by an arrow XI in Fig. 10(a).
Fig. 12 illustrates the dynamic characteristics (stroke versus seatbelt-load characteristics) of the seatbelt retractor according to the present invention and the seatbelt retractor of the conventional example.

### Best Mode for Carrying Out the Invention

Embodiments of the present invention will now be described with reference to the drawings.

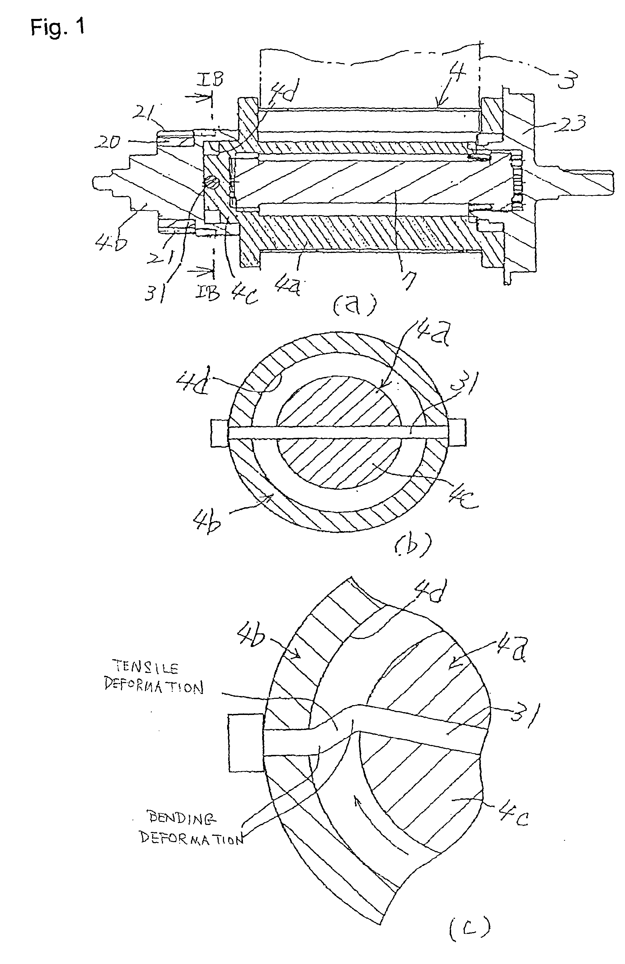

Fig. 1 schematically and partially illustrates a seatbelt retractor according to a first embodiment of the present invention. Specifically, Fig. 1(a) is a cross-sectional view of a spool according to the first embodiment, Fig. 1(b) is a cross-sectional view taken along line IB-IB in Fig. 1(a), and Fig. 1(c) is a partially enlarged view illustrating the behavior of a pretensioner in an activated state. In each of the embodiments below, the components that are the same as those in the prior embodiment or in the conventional example shown in Figs. 10(a), 10(b), and 11 are given the same reference numerals, and detailed descriptions of those components will be omitted.

In the conventional example shown in Figs. 10(a), 10(b), and 11 described above, the spool 4 is integrated with the belt-retracting portion of the seatbelt 3 and the stationary portion of the pinion 20 of the clutch mechanism so as to form a single-piece unit. In contrast, in a seatbelt retractor 1 according to the first embodiment, the spool 4 is defined by two separate components, namely, a first spool component 4a for retracting the seatbelt 3 and a second spool component 4b to which the pinion 20 of the clutch mechanism is fixed so as to receive a driving force from the pretensioner 11.

A left-end projection 4c of the first spool component 4a is engaged to a right-end recess 4d of the second spool component 4b in a relatively rotatable manner. Referring to Fig. 1(b), a pin 31 (corresponding to a linking member according to the present invention) extends in a diameter direction of this engagement portion, such that the pin 31 extends through the left-end projection 4c of the first spool component 4a and the right-end recess 4d of the second spool component 4b. Thus, the first spool component 4a and the second spool component 4b are linked with each other. The pin 31 is formed of a material having, for example, ductility so that the pin 31 is subject to bending deformation and tensile deformation when a predetermined relative rotational torque or more (i.e. a rotational torque by which the first spool component 4a rotates relatively with respect to the second spool component 4b) is generated between the first spool component 4a and the second spool component 4b. Furthermore, the pin 31 has a mechanism (i.e. left and right flanges in the drawing) for preventing it from falling off readily from the first spool component 4a and the second spool component 4b.

Other configurations of the seatbelt retractor 1 according to the first embodiment are the same as those of the seatbelt retractor 1 of the conventional example shown in Figs. 10(a), 10(b), and 11.

Similar to the conventional example, in the normal condition of the seatbelt retractor 1 according to the first embodiment, the first and second spool components 4a, 4b rotate together in the belt-withdrawing direction when the spool 4 rotates in the belt-withdrawing direction. For this reason, in the normal condition of the seatbelt retractor 1 according to the first embodiment, a relative rotational torque is substantially not generated between the first spool component 4a and the second spool component 4b. Thus, the pin 31 is not subject to deformation.

On the other hand, in an emergency situation such as a collision of a vehicle, when the seatbelt 3 is being withdrawn due to an inertia force from the vehicle occupant after the belt-retracting operation by the pretensioner 11, the first spool component 4a is biased in the belt-withdrawing direction. In this case, the pinion 20 is rotatable in the belt-withdrawing direction regardless of the condition of the pretensioner 11 so that the first spool component 4a can be rotated readily in the belt-withdrawing direction. Consequently, the torsion bar 7 is readily twisted, whereby the EA function by the torsion bar 7 is sufficiently achieved.

On the other hand, when the clutch mechanism is in a connected state (i.e. a state in which the internal teeth 19 and the external teeth 21 are meshed with each other) in response to the activation of the pretensioner 11, if the pinion 20 cannot be readily rotated in the belt-withdrawing direction due to, for example, the residual pressure generated by gas remaining in the pipe 12 of the pretensioner 11, the first spool component 4a also cannot be readily rotated in the belt-withdrawing direction.

Accordingly, a relative rotational torque is generated between the first spool component 4a and the second spool component 4b. When this relative rotational torque reaches a predetermined value or more, the pin 31 is subject to bending deformation and tensile deformation, as shown in Fig. 1(c). Although not shown in Fig. 1(c), the opposite end of the pin 31 is also subject to bending deformation and tensile deformation. Thus, the first spool component 4a rotates relatively with respect to the second spool component 4b in the belt-withdrawing direction (i.e. the clockwise direction as indicated by an arrow in Fig. 1(c)).

Due to the relative rotation of the first spool component 4a with respect to the second spool component 4b, the torsion bar 7 is twisted, whereby impact energy is absorbed. In this case, the seatbelt retractor 1 has the dynamic characteristics as indicated by a solid line in Fig. 12. Specifically, in an EA range in which the torsion bar 7 performs the EA operation, the limit load is substantially uniform such that large peaks and large declines of seatbelt load are not present. Thus, the EA function by the torsion bar 7 is effectively and sufficiently achieved. Moreover, because the EA function is also achieved by the bending deformation and the tensile deformation at both ends of the pin 31, the impact energy is absorbed in a more uniform manner.

When the first spool component 4a rotates relatively with respect to the second spool component 4b to a certain extent, the pin 31 breaks at both ends thereof. Alternatively, the pin 31 may simply be formed of a shearable material.

In the seatbelt retractor 1 according to the first embodiment, when the seatbelt 3 is being withdrawn due to the inertia force from the vehicle occupant after the belt-retracting operation performed by the pretensioner 11, the torsion bar 7 is twisted regardless of the condition of the pretensioner 11. Thus, the EA function of the torsion bar 7 is properly and sufficiently achieved. Accordingly, in the EA range in which the torsion bar 7 performs the EA operation, the limit load of the seatbelt 3 is made substantially uniform without any peaks or declines, whereby the impact energy can be efficiently absorbed. Moreover, in addition to the energy absorption by the torsional deformation of the torsion bar 7, the EA function is also achieved by the bending deformation and the tensile deformation at both ends of the pin 31, whereby the impact energy can be absorbed in a more uniform manner.

Other advantages of the seatbelt retractor 1 according to the first embodiment are the same as those of the seatbelt retractor 1 of the conventional example shown in Figs. 10(a), 10(b), and 11.

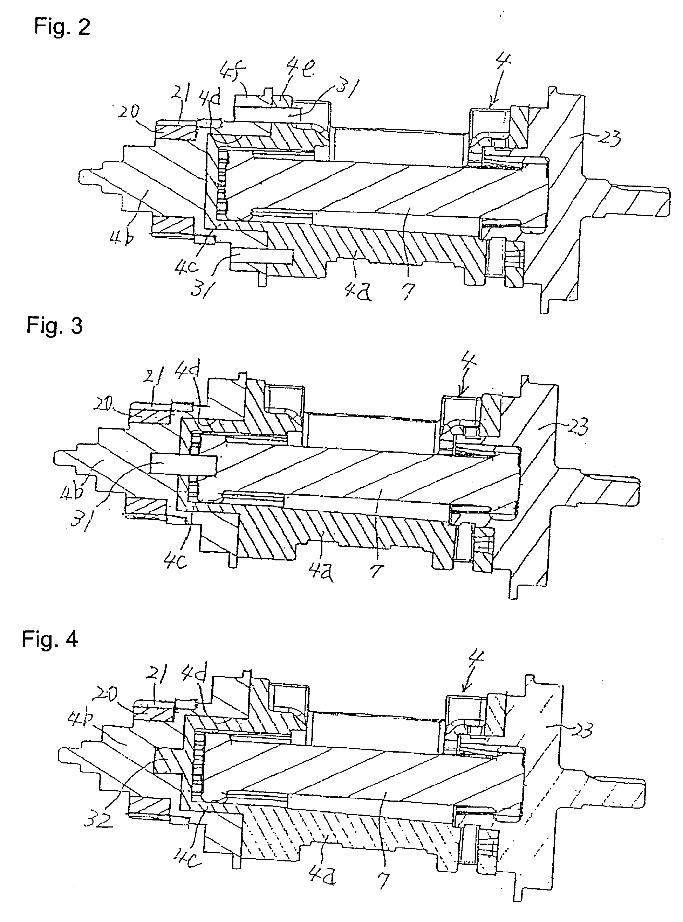

Fig. 2 schematically and partially illustrates a seatbelt retractor according to a second embodiment of the present invention. Fig. 2 corresponds to Fig. 1(a).

In contrast to the first embodiment shown in Figs. 1(a) and 1(b) in which the pin 31 links the first spool component 4a and the second spool component 4b by extending through the two components in the diameter direction, the seatbelt retractor 1 according to the second embodiment shown in Fig. 2 is preferably provided with a plurality of pins 31 that are arranged at regular intervals in the circumferential direction in order to maintain the rotational balance. Specifically, the pins 31 extend through a flange 4e of the first spool component 4a and a flange 4f of the second spool component 4b in the axial direction so as to link the first spool component 4a and the second spool component 4b.

Other configurations and advantages of the seatbelt retractor 1 according to the second embodiment are the same as those of the seatbelt retractor 1 according to the first embodiment shown in Figs. 1(a) and 1(b) and the seatbelt retractor 1 of the conventional example shown in Figs. 10(a), 10(b), and 11.

Fig. 3 schematically and partially illustrates a seatbelt retractor according to a third embodiment of the present invention. Fig. 3 corresponds to Fig. 1(a).

In contrast to the first embodiment shown in Figs. 1(a) and 1(b) in which the pin 31 links the first spool component 4a and the second spool component 4b by extending through the two components in the diameter direction, the pin 31 in the seatbelt retractor 1 according to the third embodiment shown in Fig. 3 is fitted to axial holes provided in the center of the first and second spool components 4a, 4b so as to be engaged with the first and second spool components 4a, 4b. In this case, the pin 31 and the axial holes of the first and second spool components 4a, 4b have polygonal cross section (for example, regular hexagonal cross section). In a state where the pin 31 is fitted to these axial holes, the pin 31 is relatively non-rotatable with respect to the first and second spool components 4a, 4b.

Similar to the above, in the seatbelt retractor 1 according to the third embodiment, when a predetermined relative rotational torque or more is generated between the first spool component 4a and the second spool component 4b after the operation by the pretensioner 11, the pin 31 is twisted so that the first spool component 4a is rotated relatively with respect to the second spool component 4b in the belt-withdrawing direction.

Accordingly, in the seatbelt retractor 1 according to the third embodiment, the EA function by the torsional deformation of the torsion bar 7 and the EA function by the torsional deformation of the pin 31 are achieved, whereby the impact energy can be absorbed efficiently.

When the first spool component 4a rotates relatively with respect to the second spool component 4b to a certain extent, the pin 31 breaks.

Other configurations and advantages of the seatbelt retractor 1 according to the third embodiment are the same as those of the seatbelt retractor 1 according to the first embodiment shown in Figs. 1(a) and 1(b) and the seatbelt retractor 1 of the conventional example shown in Figs. 10(a), 10(b), and 11.

Fig. 4 schematically and partially illustrates a seatbelt retractor according to a fourth embodiment of the present invention. Fig. 4 corresponds to Fig. 1(a).

In contrast to the third embodiment shown in Fig. 3 in which the pin 31 is provided separately from the first and second spool components 4a, 4b and is engaged in a relatively non-rotatable manner to the axial holes in the center of the first and second spool components 4a, 4b, the seatbelt retractor 1 according to the fourth embodiment shown in Fig. 4 is provided with a protrusion shaft 32 (corresponding to the linking member according to the present invention) in place of the pin 31. Specifically, the protrusion shaft 32 is integrated with the first spool component 4a so as to form a single-piece unit. Similar to the third embodiment, the protrusion shaft 32 is engaged to an axial hole provided in the center of the second spool component 4b in a relatively non-rotatable manner.

In the seatbelt retractor 1 according to the fourth embodiment, the protrusion shaft 32 integrated with the first spool component 4a to form a single-piece unit contributes to a less number of components.

Other configurations and advantages of the seatbelt retractor 1 according to the fourth embodiment are the same as those of the seatbelt retractor 1 according to the third embodiment shown in Fig. 3 and the seatbelt retractor 1 of the conventional example shown in Figs. 10(a), 10(b), and 11.

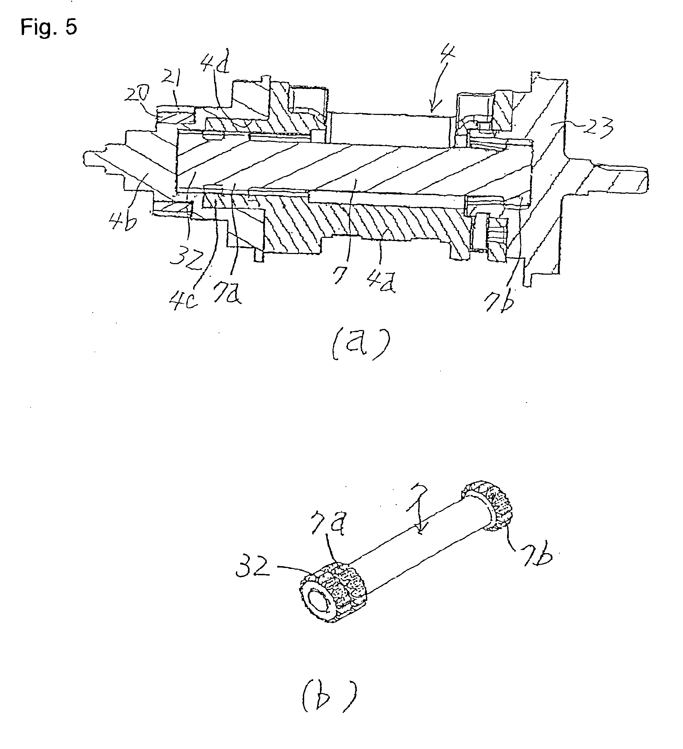

Fig. 5 includes a schematic view and a partial view of a seatbelt retractor according to a fifth embodiment of the present invention. Fig. 5 corresponds to Fig. 1(a).

In contrast to the fourth embodiment shown in Fig. 4 in which the protrusion shaft 32 is integrated with the first spool component 4a, the protrusion shaft 32 in the seatbelt retractor 1 according to the fifth embodiment shown in Fig. 5 is integrated with the torsion bar 7 so as to form a single-piece unit. In this case, the protrusion shaft 32 has the same shape as the first torque transmission shaft 7a of the torsion bar 7 splined to the first spool component 4a in an integrally rotatable manner, and is splined to the second spool component 4b in an integrally rotatable manner. Alternatively, one of the first torque transmission shaft 7a and the protrusion shaft 32 may be reduced in size. This reduces the dimension of the storage space and contributes to the size reduction and weight reduction of the seatbelt retractor 1.

Since the protrusion shaft 32 is integrated with the torsion bar 7 to form a single-piece unit in the seatbelt retractor 1 according to the fifth embodiment, substantially the same EA function as the torsion bar 7 can be achieved by the protrusion shaft 32.

Other configurations and advantages of the seatbelt retractor 1 according to the fifth embodiment are the same as those of the seatbelt retractor 1 according to the fourth embodiment shown in Fig. 4 and the seatbelt retractor 1 of the conventional example shown in Figs. 10(a), 10(b), and 11.

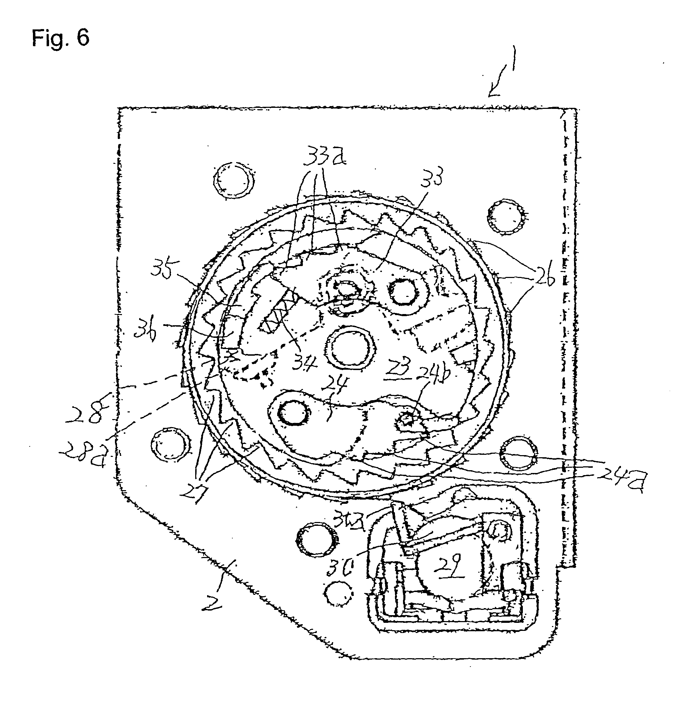

Fig. 6 illustrates a seatbelt retractor 1 according to a sixth embodiment in which the locking base 23 is not provided with a webbing sensor (the webbing sensor 28 is indicated by a dotted line in Fig. 6 for descriptive purposes). On the other hand, the locking base 23 is provided with a quick-lock pawl 33, which is disposed in a rotatable manner and is activated in an emergency situation. Similar to the conventional example, the webbing sensor 28 is provided on the lock gear 25, and the latching claw 28a of the webbing sensor 28 is engageable to the internal tooth 42a.

One end of the quick-lock pawl 33 is provided with a plurality of latching claws 33a engageable to the internal teeth 27. Moreover, the quick-lock pawl 33 and the locking base 23 have a spring 34 (corresponding to a biasing mechanism according to the present invention) disposed therebetween. Due to a biasing force of the spring 34, the quick-lock pawl 33 is constantly biased in the clockwise direction in Fig. 6, or in other words, in the direction in which the latching claws 33a engage to the internal teeth 27.

Furthermore, the locking base 23 is also provided with an arc-shaped stopper 35 formed of a plate-like material. The stopper 35 is slidably engaged to an arc-shaped guide groove 36, which is provided in the locking base 23 and is centered on the rotary shaft of the spool 4. The stopper 35 and the guide groove 36 have a predetermined frictional force therebetween. Normally, the stopper 35 is maintained at an initial position where a step portion of the stopper 35 abuts on a step portion of the guide groove 36, as shown in Fig. 6. In this initial position of the stopper 35, one end of the stopper 35 projected from the guide groove 36 abuts on one of the latching claws 33a of the quick-lock pawl 33, such that all of the latching claws 33a are positionally maintained in a non-engaged state with respect to the internal teeth 27. Alternatively, the end of the stopper 35 may abut on two or more latching claws 33a.

When the spool 4 is rotated rapidly in the belt-retracting direction in response to the activation of the pretensioner 11, the stopper 35 does not respond to the rotation of the locking base 23 in the belt-retracting direction. Instead, the stopper 35 moves (rotates) along the guide groove 36 against the frictional force with respect to the guide groove 36 until the stopper 35 abuts on a base portion of the guide groove 36.

Other configurations of the seatbelt retractor 1 according to the sixth embodiment are the same as those of the seatbelt retractor 1 of the conventional example shown in Figs. 10(a), 10(b), and 11.

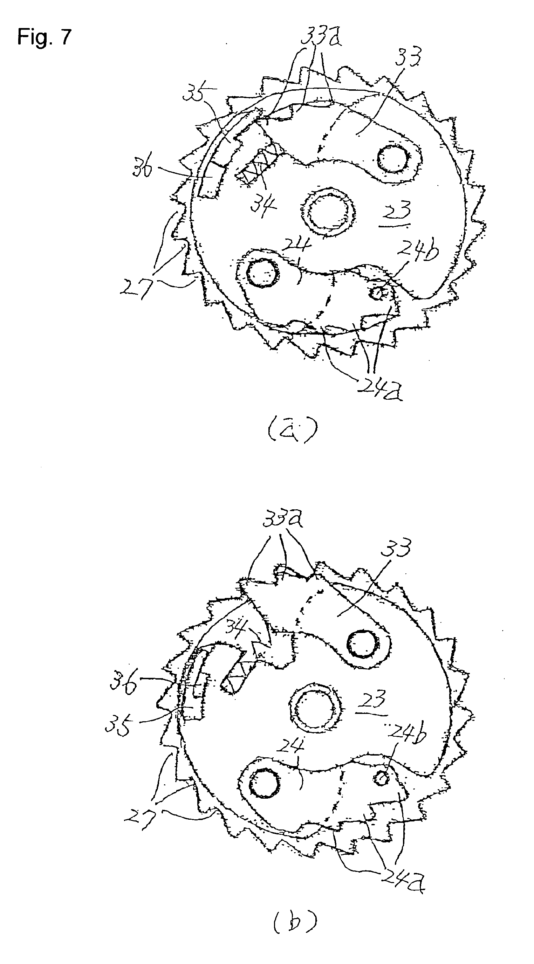

Similar to the conventional example, in the seatbelt retractor 1 according to the sixth embodiment, when the seatbelt 3 is being withdrawn or retracted under normal condition, the spool 4 and the locking base 23 rotate together at normal speed. Thus, the stopper 35 does not move and is maintained at its initial position as shown in Fig. 7(a). Accordingly, due to the stopper 35, the quick-lock pawl 33 is also maintained at a non-active position where the latching claws 33a are not engaged with the internal teeth 27.

Similarly, since the pretensioner 11 is not activated in response to a small collision of the vehicle (for example, about 1.5 G) or rapid withdrawing of the seatbelt 3, the stopper 35 does not move and is maintained at its initial position as shown in Fig. 7(a). Accordingly, due to the stopper 35, the quick-lock pawl 33 is also maintained at the non-active position where the latching claws 33a are not engaged with the internal teeth 27.

On the other hand, in case of an emergency situation such as a large collision where the vehicle decelerates significantly, the pretensioner 11 is activated so that the spool 4 and the locking base 23 are quickly rotated together in the belt-retracting direction. Subsequently, without responding to the quick rotation of the locking base 23 in the belt-retracting direction, the stopper 35 is guided by the guide groove 36 as shown in Fig. 7(b) so as to move (rotate) counterclockwise relatively with respect to the locking base 23. As a result, the stopper 35 reaches an active position where the stopper 35 abuts on the base portion of the guide groove 36. Accordingly, the stopper 35 is shifted away from the latching claws 33a, and the quick-lock pawl 33 is rotated clockwise due to the biasing force of the spring 34, whereby the latching claws 33a become engaged to the internal teeth 27. This locks the locking base 23 so that the locking base 23 is held back from rotating in the belt-withdrawing direction, and the EA operation by the torsion bar 7 is quickly performed.

In this case, as shown in Fig. 7(b), the latching claws 24a of the pawl 24 are not engaged to the internal teeth 27 since the spool 4 has not yet reached a rotational angle θ in response to the activation of the vehicle sensor 5. Accordingly, in the seatbelt retractor 1 according to the sixth embodiment, the locking base 23 is locked and held back from rotating in the belt-withdrawing direction under an emergency situation much more quickly than in the conventional example in which the locking of the locking base 23 with respect to the belt-withdrawing direction is achieved by the pawl 24.

According to the seatbelt retractor 1 of the sixth embodiment, before the latching claws 24a of the pawl 24 engage to the internal teeth 27, the quick-lock pawl 33 is engaged to the internal teeth 27 by responding to the rapid rotation of the spool 4 in response to the activation of the pretensioner 11 in an emergency situation. For this reason, in case of an emergency situation, the spool 4 can be locked quickly, and the rotational angle of the spool 4 in the belt-withdrawing direction can be held back to the utmost extent until the spool 4 becomes locked. Thus, the vehicle occupant can be restrained sufficiently with the seatbelt 3. Moreover, as indicated by a double-dashed line in Fig. 12, the decline of seatbelt load in the EA operation by the torsion bar 7 can be reduced, whereby the EA function by the torsion bar 7 can be efficiently and sufficiently achieved. Accordingly, by combining the first and second spool components 4a, 4b and the pin 31 or the protrusion shaft 32 according to the above embodiments, a seatbelt retractor having improved, stable EA characteristics is provided.

Other advantages of the seatbelt retractor 1 according to the sixth embodiment are the same as those of the seatbelt retractor 1 according to one of the first to fifth embodiments shown in Figs. 1 to 5 and the seatbelt retractor 1 of the conventional example shown in Figs. 10(a), 10(b), and 11.

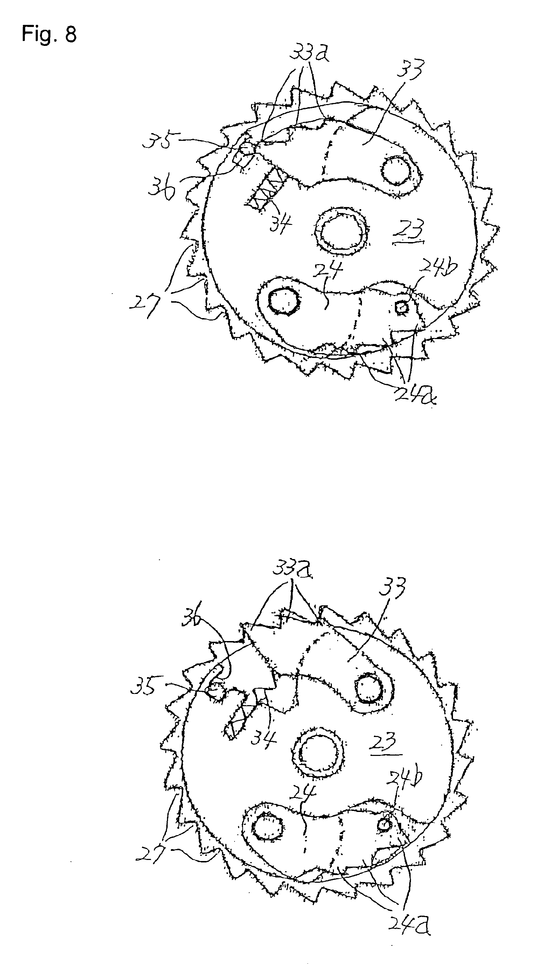

Fig. 8 illustrates a seatbelt retractor according to a seventh embodiment of the present invention. Specifically, Fig. 8(a) corresponds to Fig. 7(a), and Fig. 8(b) corresponds to Fig. 7(b).

In contrast to the sixth embodiment shown in Fig. 6 in which the stopper 35 is formed of an arc-shaped plate-like material, the stopper 35 in the seatbelt retractor 1 according to the seventh embodiment shown in Figs. 8(a) and 8(b) is formed of a pin-like material. Consequently, in the seatbelt retractor 1 according to the seventh embodiment, the stopper 35 is given a simpler shape and can be manufactured at a lower cost.

Other configurations and advantages of the seatbelt retractor 1 according to the seventh embodiment are the same as those of the seatbelt retractor 1 according to the sixth embodiment shown in Fig. 6 and the seatbelt retractor 1 of the conventional example shown in Figs. 10(a), 10(b), and 11.

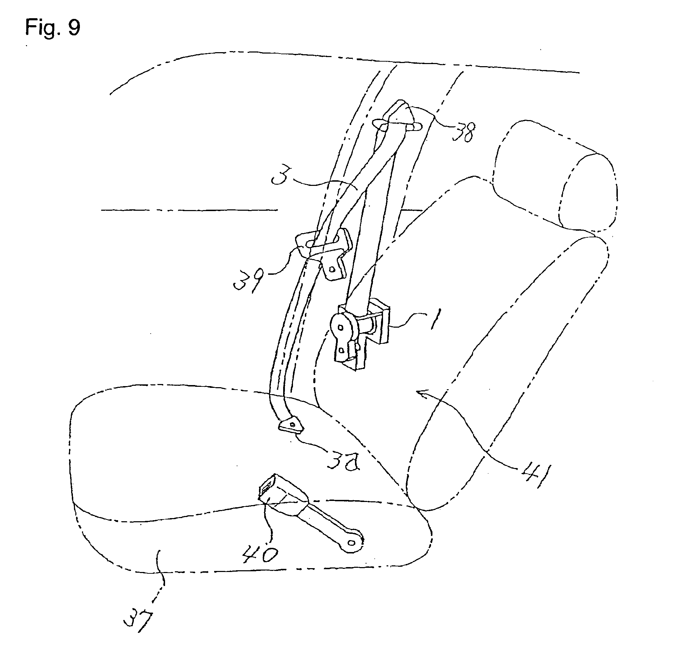

The seatbelt retractor 1 according to each of the above embodiments is applicable to the seatbelt retractor 1 used in a conventional seatbelt device. Fig. 9 illustrates an example of a seatbelt device 41 to which the seatbelt retractor 1 according to each of the above embodiments can be applied. The seatbelt device 41 includes the seatbelt retractor 1 fixed to a vehicle body; the seatbelt 3 withdrawn from the seatbelt retractor 1 and having a belt anchor 3a at its end, the belt anchor 3a being fixed to the floor of the vehicle or to a vehicle seat 37; a guide anchor 38 for guiding the seatbelt 3 withdrawn from the seatbelt retractor 1 towards the vehicle occupant's shoulders; a tongue 39 which is slidably supported by the seatbelt 3 guided by the guide anchor 38; and a buckle 40 which is fixed to the floor of the vehicle body or to the vehicle seat and is engageable to and releasable from the tongue 39.

Although the pretensioner 11 in each of the above embodiment is a type in which the driving force of the pretensioner 11 is transmitted to the spool 4 via the plurality of force-transmitting members 13 formed of balls, the pretensioner 11 according to the present invention is not limited to this type. Alternatively, the pretensioner 11 may be, for example, the type disclosed in Patent Document 3 in which the driving force of the pretensioner 11 is transmitted to the spool 4 via a rack, or may be other various conventional types of pretensioners 11.

### Industrial Applicability

The seatbelt retractor and the seatbelt device equipped with the seatbelt retractor according to the present invention are used for restraining and protecting a vehicle occupant with a seatbelt. The seatbelt retractor and the seatbelt device equipped with the seatbelt retractor are provided with a pretensioner, which increases the restraining force applied to the vehicle occupant from the seatbelt by rotating a spool in a belt-withdrawing direction in an initial stage of an emergency situation. Moreover, the seatbelt retractor and the seatbelt device equipped with the seatbelt retractor are also provided with an energy-absorbing mechanism for absorbing impact energy acting upon the vehicle occupant from the seatbelt when the seatbelt is held back from being withdrawn.

## Claims

1. A seatbelt retractor comprising:
a spool (4) which retracts a seatbelt (3);
a locking member (23) which is normally rotatable integrally with the spool (4);
a lock mechanism (6) which is activated under an emergency situation and locks the locking member (23) to prevent the locking member (23) from rotating in a belt-retracting direction;
a torsion bar (7) linking the spool (4) and the locking member (23), the torsion bar (7) normally linking the spool (4) and the locking member (23) in an integrally rotatable manner, the torsion bar (7) being twisted when the locking member (23) is locked by the lock mechanism (6) with respect to the belt-retracting direction;
a pretensioner (11) which is activated under the emergency situation so as to generate a driving force; and
a driving-force transmitting member (13) which is provided in the spool (4) and transmits the driving force of the pretensioner (11) to the spool (4),
wherein the seatbelt (3) is retracted with the driving force of the pretensioner (11) in an initial stage of the emergency situation,
wherein a load applied to the seatbelt (3) is limited by torsional deformation when the locking member (23) is locked by the lock mechanism (6) with respect to the belt-retracting direction,
wherein the spool (4) includes:
a first spool component (4a) retracting the seatbelt (3);
a second spool component (4b) provided with the driving-force transmitting member (13) in an integrally rotatable manner such that the driving force of the pretensioner (11) is transmitted to the second spool component (4b) in the belt-retracting direction via the driving-force transmitting member (13); and
a linking member (31; 32) linking the first and second spool components (4a, 4b) in a rotatable manner, the linking member (31; 32) normally allowing the first and second spool components (4a, 4b) to rotate integrally, the linking member (31; 32) being deformed when a predetermined relative rotational torque or more is generated between the first and second spool components (4a, 4b) in an activated state of the pretensioner (11) so as to allow the first spool component (4a) to rotate relatively with respect to the second spool component (4b) in a belt-withdrawing direction.

2. The seatbelt retractor according to Claim 1, wherein the linking member (31) is subject to bending deformation and tensile deformation.

3. The seatbelt retractor according to Claim 1 or Claim 2,
wherein the linking member (31; 32) is subject to torsional deformation.

4. The seatbelt retractor according to any one of Claims 1 to 3, wherein the locking member (23) is provided with a quick-lock member (33) for locking the spool (4) to prevent the spool (4) from rotating in the belt-withdrawing direction when the spool (4) is rotated rapidly in the belt-retracting direction in response to the activation of the pretensioner (11).

5. The seatbelt retractor according to Claim 4, wherein the quick-lock member (33) is disposed rotatably in the locking member (23) such that the quick-lock member (33) is engageable to a frame (2) supporting the spool (4), the engagement between the quick-lock member (33) and the frame (2) locking the spool (4) so as to prevent the spool (4) from rotating in the belt-withdrawing direction.

6. The seatbelt retractor according to Claim 5, wherein the quick-lock member comprises a quick-lock pawl (33) disposed rotatably in the locking member (23), the quick-lock pawl (33) being biased constantly towards teeth (27) provided in the frame (2) by a biasing mechanism (34), wherein the locking member (23) has a stopper (35) disposed in a movable manner, the stopper (35) maintaining the quick-lock pawl (33) in a position where the quick-lock pawl (33) is not engaged to the teeth (27) of the frame (2), and
wherein the stopper (35) is shifted when the spool (4) is rotated rapidly in the belt-retracting direction in response to the activation of the pretensioner (11) so as to allow the quick-lock pawl (33) to engage with the teeth (27) of the frame (2).

7. A seatbelt device comprising:
the seatbelt retractor (1) according to any one of Claims 1 to 6, the seatbelt retractor (1) retracting a seatbelt (3);
a tongue (39) slidably supported by the seatbelt (3) withdrawn from the seatbelt retractor (1); and
a buckle (40) engageable to and releasable from the tongue (39),
wherein the seatbelt retractor (1) prevents the seatbelt (3) from being withdrawn under an emergency situation in order to restrain a vehicle occupant.
